# EUROPÄISCHE PATENTSCHRIFT

(11) **EP 3 231 279 B1**
(45) Veröffentlichungstag und Bekanntmachung des Hinweises auf die Patenterteilung: **12.12.2018**
(21) Anmeldenummer: 17166072.3
(22) Anmeldetag: 11.04.2017
(51) Int. Cl.: A01K 1/015, B32B 5/02, B32B 5/18, B32B 5/22, B32B 5/24, B32B 7/12, B32B 27/06, B32B 27/08, B32B 3/04, B32B 3/06, B32B 1/00, B32B 3/08, B60R 13/01, A01K 1/00, A01K 1/02

(54) **ABDECKUNGSANORDNUNG FÜR EINEN LADERAUM EINES FAHRZEUGS**
COVER ASSEMBLY FOR A LOADING SPACE OF A MOTOR VEHICLE
SYSTÈME DE RECOUVREMENT POUR UN ESPACE DE CHARGEMENT D'UN VÉHICULE

(30) Priorität: 11.04.2016 DE 202016101893 U
(43) Veröffentlichungstag der Anmeldung: 18.10.2017
(73) Patentinhaber: Heubel GmbH, 59439 Holzwickede (DE)
(72) Erfinder: Heubel, Markus, 59439 Holzwickede (DE)
(74) Vertreter: Glück Kritzenberger Patentanwälte PartGmbB

(56) Entgegenhaltungen:
- WO-A1-2011/121682
- DE-A1- 10 212 464
- US-A1- 2011 192 419
- US-B1- 6 295 658

## Beschreibung

Die vorliegende Erfindung betrifft eine Abdeckungsanordnung für einen Laderaum eines Fahrzeugs.

Abdeckanordnungen umfassend mehrere Schutzabdeckungen, die auch als Schutzauflagen bzw. Schutzeinlagen bezeichnet werden, für den Laderaum, insbesondere den Kofferraum, eines Fahrzeugs sind aus dem Stand der Technik hinlänglich und in den unterschiedlichsten Ausführungsformen bekannt. Diese finden beispielweise zum Transport von Haustieren, insbesondere Hunden im Kofferraum eines Fahrzeuges Verwendung.

Aus der Druckschrift DE 102 12 464 A1 ist beispielsweise eine Schutzeinlage für den Innenraum von Personenkraftwagen bekannt geworden, die eine an den jeweiligen Kofferraum angepasste Bodenabdeckung sowie eine Schürze zur Abdeckung der Ladekante umfasst. Die Schutzeinlage wird dabei insbesondere von einer biegeschlaffen und wasserdichten Plane gebildet, die an den aufrechten Wänden des Kofferraums lösbar befestigt ist. Die Schutzeinlage ist einstückig bzw. einteilig ausgebildet umfasst dabei mehrere Abschnitte, und zwar einen im Wesentlichen rechteckförmigen Bodenabschnitt sowie zwei an gegenüberliegenden Seitenkanten anschließende Seitenwandabschnitte und einen an einer dritten Kante anschließenden Rückwandabschnitt, wobei sich an die dem Rückwandabschnitt gegenüberliegenden Kante die Schürze anschließt, mit der die Ladekante des Fahrzeugs bei geöffneter Kofferraumklappe abgedeckt werden kann. Die Seitenwandabschnitte und der Rückwandabschnitte stehen vertikal nach oben vom Bodenabschnitt ab und bilden eine zur Schürze offene "wannenartige" Schutzeinlage aus. Nachteilig verrutschen derartige Schutzeinlagen innerhalb des Kofferraums, insbesondere beim Be- oder Entladen. Die Herstellung aus einer wasserdichten Plane verhindert zwar ein Eindringen von Feuchtigkeit in den Kofferraumboden, nachteilig befindet sich jedoch dadurch die Feuchtigkeit auf der Oberfläche der Schutzeinlage, wodurch der Transportkomfort für Haustiere reduziert wird. Insbesondere führt dies dazu, dass sich einzelne Haustiere einem Transport verweigern.

Die Druckschrift US 2011/192419A1 offenbart eine Abdeckungsanordnung umfassend mehrere, aus einem mehrschichten Material hergestellte und mattenartig ausgebildete Abdeckungselemente, die zumindest eine offenzellige Schaumstoffschicht aufweisen, an deren Oberseite wenigstens eine diffusionsoffene Oberflächenschicht vorgesehen ist, und wobei zwischen der Schaumstoffschicht und der Trägerschicht eine feuchtigkeitsundurchlässige Sperrschicht angeordnet ist, gemäss dem Oberbegriff des Anspruchs 1. Ausgehend hiervon ist es Aufgabe der vorliegenden Erfindung, eine verbesserte Abdeckanordnung für einen Laderaum eines Fahrzeugs bereitzustellen, die die Nachteile des Standes der Technik beseitigt, insbesondere ein Verrutschen im Laderaum des Fahrzeugs wirkungsvoll verhindert und zudem flexibel an den Laderaum anpassbar ist. Diese Aufgabe wird durch die Merkmale des Patentanspruches 1 gelöst.

Die Unteransprüche betreffen dabei besonders bevorzugte Ausführungsvarianten der Erfindung.

Der wesentliche Aspekt der erfindungsgemäßen Abdeckungsanordnung für den Laderaum eines Fahrzeugs ist darin zu sehen, dass diese mehrere, aus einem mehrschichtigen Material hergestellte und mattenartig ausgebildete Abdeckungselemente umfasst, die zumindest eine offenzellige Schaumstoffschicht aufweisen, an deren Oberseite wenigstens eine diffusionsoffene Oberflächenschicht und an deren Unterseite zumindest eine rutschhemmende Trägerschicht vorgesehen ist, wobei zwischen der Schaumstoffschicht und der Trägerschicht eine feuchtigkeitsundurchlässige Sperrschicht angeordnet ist. Besonders vorteilhaft wird durch das Vorsehen einer rutschhemmenden Trägerschicht ein Verrutschen der Abdeckungsanordnung im Kofferraum bzw. Laderaum eines Fahrzeuges verhindert und zugleich durch diffusionsoffene Oberflächenschicht ein Eindringen der Feuchtigkeit in die offenzellige Schaumstoffschicht ermöglicht, so dass eine Ansammlung von Feuchtigkeit auf der Oberfläche der Abdeckungselemente effektiv verhindert wird, wobei die feuchtigkeitsundurchlässige Sperrschicht weiterhin ein Eindringen von Feuchtigkeit in den Kofferraumboden verhindert.

Bevorzugt kann die diffusionsoffene Oberflächenschicht dazu ausgebildet sein, an ihrer der Schaumstoffschicht abgewandten Oberflächenseite befindliche Feuchtigkeit in die Schaumstoffschicht zu leiten.

Weiterhin bevorzugt kann die Oberflächenschicht zumindest teilflächig aus einem Microfasergewebe und/oder Kunstleder gebildet bzw. hergestellt sein.

Auch vorteilhaft kann die Schaumstoffschicht zumindest teilweise aus einem thermoplastischen und/oder elastomerischen und/oder duroplastischen Material gebildet sein.

In einer vorteilhaften Ausführungsvariante ist die Trägerschicht aus einem nicht gewebten Textilgewebe, insbesondere Filz, gebildet.

In einer weiteren vorteilhaften Ausführungsvariante bilden zumindest die Schaumstoffschicht, die Oberflächenschicht, die Trägerschicht sowie die Sperrschicht des jeweiligen Abdeckungselementes kongruente Flächenelemente aus, die zumindest teilflächig in unmittelbaren Berührungskontakt stehen, d.h. diese bilden ein mehrschichtiges, mattenartiges Material aus.

In einer weiteren vorteilhaften Ausführungsvariante kann zwischen der Sperrschicht und der Schaumstoffschicht zumindest teilflächig eine plattenartige Verstärkungsschicht vorgesehen sein. Hierdurch wird eine zusätzliche Versteifung der Abdeckungselemente erreicht.

Erfindungsgemäß ist zumindest teilflächig an der Unterseite der Schaumstoffschicht wenigstens eine elektrische Heizeinrichtung zum Ausheizen von in der Schaumstoffschicht befindlicher Feuchtigkeit vorgesehen sein. Eine derartige elektrische Heizeinrichtung kann als Flächenheizelement, insbesondere als Heizfolienelement ausgebildet sind.

Weiterhin bevorzugt kann zumindest ein einen Abdeckungsboden ausbildendes mattenartiges Abdeckungselement sowie zumindest ein, ein Seitenelement bildendes mattenartiges Abdeckungselement vorgesehen sein. Vorteilhaft kann das zumindest eine den Abdeckungsboden ausbildende Abdeckungselement in seiner geometrischen Grundform an die geometrische Grundform des Laderaumbodens eines Fahrzeuges vorzugsweise individuell angepasst sein. Auch kann das zumindest eine den Abdeckungsboden ausbildende Abdeckungselement zumindest einen, sich zumindest teilweise entlang einer freien Randkante erstreckenden Randabschnitt aufweisen. Vorteilhafter kann das zumindest eine den Abdeckungsboden ausbildende Abdeckungselement wenigstens einen ersten und einen zweiten seitlichen Randabschnitt aufweisen, wobei der erste und zweite Randabschnitt an entsprechend gegenüberliegenden freien Randkanten des Abdeckungselementes vorgesehen sind. Besonders bevorzugt kann das zumindest eine den Abdeckungsboden ausbildende Abdeckungselement an der dem ersten und zweiten Randabschnitt verbindenden freien Randkante wenigstens einen dritten Randabschnitt aufweisen, der einen Rückenwandabschnitt ausbildet.

In einer nochmals weiteren bevorzugten Ausführungsvariante kann der erste und/oder zweite und/oder dritte Randabschnitt jeweils in wenigstens zwei Teilrandabschnitte durch eine entsprechende Abtrennung unterteilt sein.

Bevorzugt kann das zumindest eine den Abdeckungsboden ausbildende Abdeckungselement zumindest eine Steppnaht aufweisen, die eine Biege- oder Klappkante ausbildet.

In einer nochmals weiteren bevorzugten Ausführungsvariante kann das zumindest eine den Abdeckungsboden ausbildende Abdeckungselement an der dem dritten Randabschnitt gegenüberliegenden freien Randkante einen Ladekantenschutz aufweisen. Der Ladekantenschutz weist in einer bevorzugten Ausführungsvariante eine Faltung, insbesondere eine leporelloartige Faltung auf. Auch kann an der zum Fahrzeug gewandeten Seite des Ladekantenschutzes zuumindest abschnittsweise eine dämpfende und/oder rutschhemmende Beschichtung vorgesehen sein.

In einer wiederum weiteren bevorzugten Ausführungsvariante kann das zumindest eine als Seitenelement ausbildende Abdeckungselement in seiner geometrischen Grundform an die geometrische Grundform der Seitenverkleidung des Laderaums des Fahrzeuges angepasst sein. Weiterhin bevorzugt kann das zumindest eine als Seitenelement ausgebildete Abdeckungselement wenigstens ein Befestigungsmittel, insbesondere wenigstens einen Druckknopf, aufweisen. Nochmals bevorzugt kann das zumindest eine als Seitenelement ausbildende Abdeckungselement wenigstens eine Ausnehmung aufweisen.

Die Ausdrucke "näherungsweise", "im Wesentlichen", "ca." oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1a: eine erste Ausführungsvariante des mehrschichtigen Aufbaus eines Abdeckelementes einer Abdeckungsanordnung in einer schematischen seitlichen Schnittdarstellung,
- Fig. 1b: eine weitere Ausführungsvariante des mehrschichtigen Aufbaus eines Abdeckelementes einer Abdeckungsanordnung in einer schematischen seitlichen Schnittdarstellung,
- Fig. 1c: eine nochmals weitere Ausführungsvariante des mehrschichtigen Aufbaus eines Abdeckelementes der erfindungsgemäßen Abdeckungsanordnung in einer schematischen seitlichen Schnittdarstellung,
- Fig. 2a: eine schematische Perspektivansicht eines als Abdeckungsboden ausgebildeten Abdeckungselementes,
- Fig. 2b: eine schematische Seitenansicht eines als Seitenelementes ausgebildeten Abdeckungselementes.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die erfindungsgemäße Abdeckungsanordnung 1 ist insbesondere für einen Laderaum eines Fahrzeugs, vorzugsweise den Kofferraum eines Kraftfahrzeuges konzipiert, um beispielsweise Verschmutzungen und Abnutzungserscheinungen an der Polsterung des Lade- bzw. Kofferraums zu verhindern. Weiterhin ermöglicht die erfindungsgemäße Abdeckungsanordnung 1 insbesondere den sicheren und komfortablen Transport von Haustieren, insbesondere Hunden, im Laderaum des Fahrzeugs.

Die erfindungsgemäße Abdeckungsanordnung 1 umfasst vorzugsweise mehrere, aus einem mehrschichten Material hergestellte und mattenartig ausgebildete Abdeckungselemente 2, 2' - 2"", die vorzugsweise durch Flächenelemente gebildet sind, wobei mehrere unterschiedliche Abdeckungselemente 2, 2' - 2"" einer erfindungsgemäßen Abdeckungsanordnung 1 beispielsweise einen gleichen oder unterschiedlichen mehrschichtigen Aufbau aufweisen können.

Auch können zumindest einzelne der Abdeckungselemente 2, 2' - 2"" der erfindungsgemäßen Abdeckungsanordnung 1 als Abdeckungsmodule ausgebildet sein, d.h. die Abdeckungsanordnung 1 weist beispielsweise einen modulartigen Aufbau auf.

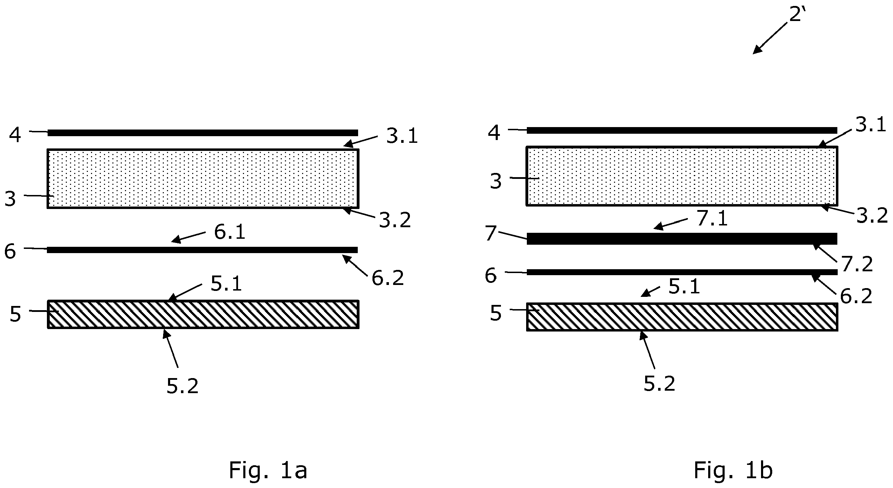

Der Schichtenaufbau zumindest einzelner Abdeckungselemente 2 wird anhand der nachfolgenden Ausführungsbeispiele gemäß den Figuren 1a bis 1c beispielhaft näher erläutert. In den Figuren 1a und 1b, die nicht Teil der Erfindung sind, ist jeweils beispielhaft ein Schnitt durch ein einzelnes, nur abschnittsweise dargestelltes Abdeckungselement 2 bzw. 2' einer Abdeckungsanordnung 1 in einer schematischen Darstellung gezeigt.

Das in Figur 1a beispielhaft gezeigte Abdeckungselement 2 ist aus einem mehrschichten Material hergestellt und mattenartig, also flächig und eben mit einer von der Anzahl der vorgesehenen Materialschichten abhängigen Materialstärke ausgebildet. Insbesondere umfasst das Abdeckungselement 2 zumindest eine offenzellige Schaumstoffschicht 3, an deren Oberseite 3.1 wenigstens eine diffusionsoffene Oberflächenschicht 4 und an deren Unterseite 3.2 zumindest eine rutschhemmende Trägerschicht 5 vorgesehen ist. Zudem ist zwischen der Schaumstoffschicht 3 und der Trägerschicht 5 eine feuchtigkeitsundurchlässige Sperrschicht 6 angeordnet.

Die diffusionsoffene Oberflächenschicht 4 ist insbesondere dazu ausgebildet, an ihrer von der Schaumstoffschicht 3 abgewandten Oberflächenseite befindliche Feuchtigkeit in die Schaumstoffschicht 3 zu leiten bzw. an die Schaumstoffschicht 3 abzugeben. Besonders vorteilhaft wird damit eine möglichst schnelle Trocknung der Oberflächenschicht 4 erreicht, die zur weiteren Erhöhung des Transportkomforts eines Haustieres beiträgt. Die Oberflächenschicht 4 kann dabei beispielweise aus einem natürlichen oder künstlichen Gewebe gebildet sein. Beispielweise kann die Oberflächenschicht 4 zumindest teilflächig aus einem Microfasergewebe und/oder einem Kunstleder herstellten sein. Insbesondere kann dabei vorgesehen sein, dass der aus Microfasergewebe und/oder Kunstleder gebildete Flächenabschnitt der Oberflächenschicht 4 derart dimensioniert bzw. geometrisch bemessen ist, dass dieser eine ebene Liegefläche für ein Haustier ausbildet. Alternativ kann die Oberflächenschicht vollflächig aus einem Microfasergewebe und/oder Kunstleder gebildet sein.

Bevorzugt gelangt die Oberflächenschicht 4 zumindest teilflächig mit der Schaumstoffschicht 3, insbesondere mit deren Oberseite 3.1, in Berührungskontakt und ist zumindest an den Kontaktflächen fest mit der Oberflächenschicht 4 verbunden, beispielsweise verklebt. In einer alternativen Ausführungsvariante steht die Oberflächenschicht 4 vollflächig mit Oberseite 3.1 der Schaumstoffschicht 3 in Berührungskontakt und ist vollflächig fest mit der Schaumstoffschicht 3 verbunden, beispielweise verklebt. Weiterhin bevorzugt bilden die Oberflächenschicht 4 sowie die Schaumstoffschicht 3 kongruente Flächenabschnitte aus.

Die offenzellige Schaumstoffschicht 3 zeichnet sich dabei durch ihre offenzellige Struktur bei gleichzeitig niedriger Materialdichte aus und ist zudem elastisch verformbar ausgebildet. Mithin kann die Schaumstoffschicht 3 aus einem thermoplastischen Material, beispielweise PS-E, PP-E oder PVC-E, und/oder einem elastomerischen Material, beispielweise PUR-Weichschaum, NBR, und/oder duroplastischen Material, beispielweise PUR-Hartschaum, PF, gebildet sein. Insbesondere ist die Schaumstoffschicht 3 dazu ausgebildet, Feuchtigkeit bzw. Nässe zu speichern, d.h. aufzunehmen, und langsam wieder an die Umgebung abzugeben.

Die rutschhemmende Trägerschicht 5 kann beispielsweise aus einem nicht gewebten Textil, beispielweise einem Filz, gebildet sein. Mithin kann die Trägerschicht 5 als textiles Flächengebilde mit ungeordneten, nur schwer zu trennenden Fasern hergestellt sein. Die Trägerschicht 5 weist dabei eine den Bodenabschnitt ausbildende Unterseite 5.2 sowie eine der Sperrschicht 6 zugewandte Oberseite 5.1 auf. Bevorzugt gelangt die Trägerschicht 5 mit ihrer Oberseite 5.1 zumindest teilflächig mit einer Unterseite 6.2 der Sperrschicht 6 in Berührungskontakt und ist zumindest an den Kontaktflächen fest mit der Sperrschicht 6 verbunden, beispielsweise verklebt.

In einer alternativen Ausführungsvariante steht die Oberseite 5.1 der Trägerschicht 5 vollflächig mit der Unterseite 6.2 der Sperrschicht 6 in Berührungskontakt und ist vollflächig fest mit der Trägerschicht 5 verbunden, beispielweise verklebt. Weiterhin bevorzugt bilden die Trägerschicht 5 sowie die Sperrschicht 6 kongruente Flächen aus.

Die Sperrschicht 6 ist feuchtigkeitsundurchlässig ausgebildet und verhindert somit insbesondere ein Durchdringen von Feuchtigkeit oder Nässe auf den Laderaum des Fahrzeugs. Bevorzugt gelangt die Sperrschicht 6 mit ihrer Oberseite 6.1 zumindest teilflächig mit der Unterseite 3.2 der Schaumstoffschicht 3 in Berührungskontakt und ist zumindest an den Kontaktflächen fest mit der Schaumstoffschicht 3 verbunden, beispielsweise verklebt. In einer alternativen Ausführungsvariante steht die Oberseite 6.1 der Sperrschicht 6 vollflächig mit der Unterseite 3.2 der Schaumstoffschicht 3 in Berührungskontakt und ist vollflächig fest mit der Schaumstoffschicht 3 verbunden, beispielweise verklebt. Weiterhin bevorzugt bilden die Sperrschicht 6 sowie die Schaumstoffschicht 3 kongruente Flächen aus.

In Figur 1b ist eine weitere Ausführungsvariante eines einzelnen, nur abschnittsweise dargestellten Abdeckungselementes 2' einer Abdeckungsanordnung 1 in einer schematischen seitlichen Schnittdarstellung gezeigt. Unterschiedlich zur Ausführungsvariante gemäß der Figur 1a ist in der Ausführungsvariante gemäß der Figur 1b zwischen der Sperrschicht 6 und der Schaumstoffschicht 3 zumindest teilflächig eine zusätzliche plattenartige Verstärkungsschicht 7 vorgesehen, um eine im Vergleich zu der Ausführungsvariante der Figur 1a größere Biegefestigkeit des Abdeckelementes 2 zu erreichen.

Besonders vorteilhaft erstreckt die Verstärkungsschicht 7 teil- oder vollflächig zwischen der Sperrschicht 6 und der Schaumschicht 3. Weiterhin bevorzugt ist die Verstärkungsschicht 7 zumindest jeweils teilflächig sowohl mit einer Oberseite 7.1 mit der Unterseite 3.2 der Schaumstoffschicht 3 und mit einer Unterseite 7.2 mit der Oberseite 6.1 der Sperrschicht 6 fest verbunden, beispielweise verklebt. Insbesondere kann die Verstärkungsschicht 7 aus einem Kunststoff hergestellt bzw. gebildet sein und beispielsweise eine Kunststoffplatte ausbilden. Bei der Verstärkungsschicht 7 kann es sich um eine Kunststoffplatte mit einer Dicke zwischen 1,5mm und 15mm, besonders bevorzugt zwischen 2mm und 7mm, handeln. Trotz der durch die Verstärkungsschicht 7 erreichten erhöhten Biegefestigkeit im Vergleich zu der Ausführungsvariante der Figur 1a weist die Verstärkungsschicht 7 immer noch eine elastische Verformbarkeit auf.

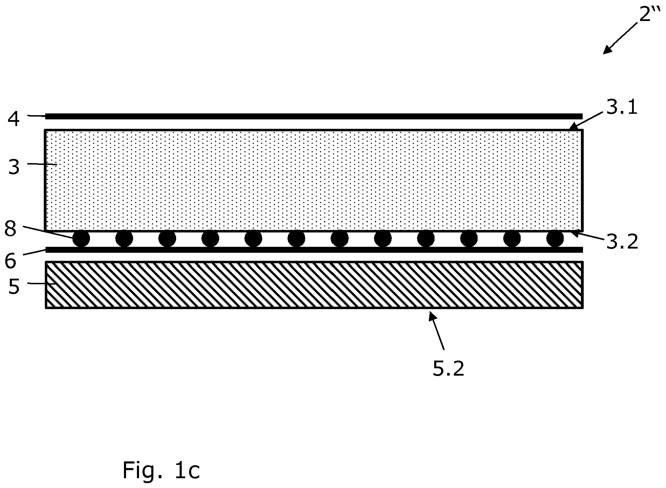

In Figur 1c ist eine erfindungsgemässe Ausführung eines, nur abschnittsweise dargestellten Abdeckungselementes 2" einer erfindungsgemäßen Abdeckungsanordnung 1 in einer schematischen seitlichen Schnittdarstellung gezeigt. Unterschiedlich zu den beiden voranstehenden Ausführungsvarianten der Figuren 1a und 1b ist in der erfindungsgemässen Ausführung gemäß Figur 1c zumindest eine Heizeinrichtung 8 vorgesehen, um eventuell in dem Abdeckungselement 2" vorhandene Feuchtigkeit bedarfsgerecht ausheizen bzw. verdampfen zu können. Insbesondere führt das Vorsehen der mindestens einen Heizeinrichtung 8 zu einem schnelleren Abtrocknen der Feuchtigkeit bzw. Nässe in der Schaumstoffschicht 3. Mittels der diffusionsoffenen Oberflächenschicht 4 ist ein problemloses ausdiffundieren der Feuchtigkeit aus der Schaumstoffschicht 3 möglich. Bei der mindestens einen Heizeinrichtung 8 kann es ich dabei um eine elektrische Heizeinrichtung 8, beispielsweise eine folien-, eine platten-, eine streifen-, oder eine litzenartige Heizeinrichtung 8 handeln. Weiterhin kann die mindestens eine Heizeinrichtung 8 als elektrisch beaufschlagbare Heizfolie ausgebildet sein. Alternativ kann es sich bei der mindestens einen Heizeinrichtung 8 um eine Carbon - oder Keramikheizung handeln. Schließlich ist es auch denkbar, die mindestens eine Heizeinrichtung 8 aus elektrisch beaufschlagbaren Heizdrähten zu bilden, oder als eine chemisch bzw. oxidationsbasiertes Heizeinrichtung 8 auszugestalten. Besonders bevorzugt kann die wenigstens eine Heizeinrichtung 8 über ein nicht nähergehend dargestelltes Bordnetz des Fahrzeugs auf vorzugsweise 12V/24V betrieben werden. Es versteht sich, dass dem Fachmann hier hinlänglich verschiedene, technisch gleichwirkende, vorzugsweise flächig ausgebildete Heizeinrichtungen 8 bekannt sind, die sich im Rahmen der vorliegenden Erfindung eignen.

Die mindestens eine Heizeinrichtung 8 kann sich dabei sowohl vollflächig, als auch teilflächig an der Unterseite 3.2 der Schaumstoffschicht 3 erstrecken, bzw. an der Unterseite 3.2 der Schaumstoffschicht 3 vorgesehen sein. Insbesondere ist im Rahmen der Erfindung angedacht, eine als Liegefläche für das Haustier angedachte Teilfläche von der Heizeinrichtung 8 auszusparen, d. h. unbeheizt zu belassen. Besonders bevorzugt ist die zumindest eine Heizeinrichtung 8 zwischen der Schaumstoffschicht 3 und der Sperrschicht 6 vorgesehen. Weist das Abdeckelement 2" eine zusätzliche Verstärkungsschicht 7 auf, so kann die wenigstens eine Heizeinrichtung 8 alternativ auch zwischen der Schaumstoffschicht 3 und der Verstärkungsschicht 7 vorgesehen sein.

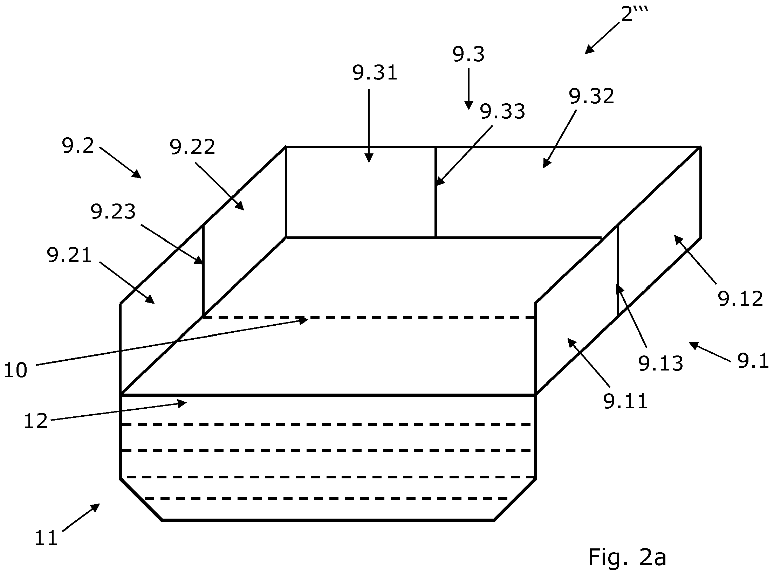

In Figur 2a ist ein als Abdeckungsboden ausgebildetes Abdeckungselement 2'" in einer schematischen Perspektivansicht mit einem mehrschichten Material gemäß einer Ausführungsvarianten der Figuren 1a bis 1c gezeigt.

In Draufsicht auf das Abdeckungselement 2'" gemäß Figur 2a stellt sich dabei eine rechteckige geometrische Grundform ein. Insbesondere ist die geometrische Grundform des als Abdeckungsboden ausgebildeten Abdeckungselementes 2'" an die geometrischen Grundform des Laderaumbodens eines Fahrzeuges angepasst, und zwar derart, dass der Laderaumboden des Fahrzeuges möglichst vollflächig von dem als Abdeckungsboden ausgebildeten Abdeckungselement 2'" bedeckt, also ausgefüllt, ist. Es versteht sich, dass die geometrische Grundform des Abdeckungselementes 2'" nicht als auf die dargestellte rechteckige Grundform beschränkt anzusehen ist, sondern eine nahezu beliebige geometrische Grundform aufweisen kann. Beispielsweise kann die geometrische Grundform des Abdeckungselementes 2'" quadratisch, dreieckförmig, kreisförmig oder auch polygonal ausgebildet sein. Insbesondere ist dabei die geometrische Grundform des jeweiligen Abdeckungselementes 2'" individuell an den Laderaum des Fahrzeuges, beispielsweise den Kofferraumboden, anpassbar ausgebildet, beispielsweise an unterschiedliche Fahrzeugtypen und/oder Hersteller.

Vorzugsweise kann das als Abdeckungsboden ausgebildete Abdeckungselement 2'" zumindest einen, sich wenigstens teilweise an einer der freien Randkanten erstreckenden Randabschnitt 9.1 - 9.3 aufweisen. Bevorzugt weist das Abdeckungselement 2'" wenigstens einen ersten und einen zweiten seitlichen Randabschnitt 9.1 und 9.2, wobei der erste Randabschnitt 9.1 einer ersten freien Randkante und der zweite Randabschnitt 9.2 einer zweiten freien Randkante des Abdeckungselementes 2 zugeordnet ist. Weiterhin kann das Abdeckungselement 2'" an einer weiteren freien Randkante einen dritten Randabschnitt 9.3 aufweisen, der einen Rückenwandabschnitt ausbildet. Der dritte Randabschnitt 9.3 ist damit insbesondere einer Rückseite einer nicht dargestellten Rücklehne einer Fahrzeugrücksitzbank oder eines Fahrzeugrücksitzes zuordenbar.

Mithin sind vorzugsweise an beispielweise drei von vier freien Seitenrändern des als Abdeckungsboden ausgebildeten Abdeckungselementes 2'" die ersten bis dritten Randabschnitte 9.1 - 9.3 vorgesehen. Der erste bis dritte Randabschnitt 9.1 - 9.3 kann dabei einstückig, insbesondere einteilig, mit dem als Abdeckungsboden ausgebildeten Abdeckungselement 2'" ausgebildet sein. Insbesondere kann im jeweiligen Übergangsbereich des ersten bis dritten Randabschnittes 9.1 - 9.3 zu dem Abdeckungselement 2'" entlang der jeweiligen Längserstreckung des entsprechenden Randabschnittes 9.1 - 9.3 eine Steppnaht vorgesehen sein. Alternativ können die ersten bis dritten Randabschnitte 9.1 - 9.3 auch an dem Abdeckungselement 2'" angenäht werden. Die Randabschnitte 9.1 - 9.3 sind vorzugsweise aus demselben mehrschichtigen Material wie das Abdeckgrundelement 2'" hergestellt.

In einer Ausführungsvariante kann der erste und/oder zweite Randabschnitt 9.1, 9.2 jeweils in wenigstens zwei Teilrandabschnitte 9.11 und 9.12, bzw. 9.21 und 9.22 untereilt sein, d.h. an den aufeinander zu weisen freien Stirnseiten relativ zueinander abgetrennt, ausgebildet sein. In anderen Worten bilden die jeweiligen Randabschnitte 9.1, 9.2 also keinen entlang ihrer Längserstreckung durchgängig ausgebildeten Randabschnitt 9.1, 9.2 aus, sondern jeweils zumindest zwei Teilrandabschnitte 9.11 und 9.12 bzw. 9.21 und 9.22, die vorzugsweise senkrecht zu ihrer jeweiligen Längserstreckung über eine entsprechende Abtrennung 9.13, 9.23 durchtrennt zueinander ausgebildet sind. Damit können die jeweiligen Teilrandabschnitte 9.11 und 9.12 bzw. 9.21 und 9.22 entsprechend relativ zueinander bewegt werden.

In einer Ausführungsvariante kann das als Abdeckungsboden ausgebildete Abdeckungselement 2'" eine Steppnaht 10 aufweisen. Vorzugsweise verläuft die Steppnaht 10 zwischen dem ersten und zweiten Randabschnitt 9.1, 9.2, und zwar vorzugsweise parallel der Längserstreckung des dritten Randabschnittes 9.3. Besonders bevorzugt verläuft die Steppnaht 10 zwischen der jeweiligen Abtrennung 9.13, 9.23 der entsprechenden Teilrandabschnitte 9.11 und 9.12 bzw. 9.21 und 9.22. Insbesondere ist die Steppnaht 10 dazu ausgebildet, eine Biege- oder Klappkante auszubilden, an der das Abdeckungselement 2'" beim Anheben an der dem dritten Randabschnitt 9.3 gegenüberliegenden freien Stirnseite zumindest teilweise umgeknickt wird.

In einer weiteren Ausführungsvariante kann auch der dritte Randabschnitt 9.3 in wenigstens zwei Teilrandabschnitte 9.31 und 9.32 unterteilt, d. h. an den aufeinander zu zeigenden freien Stirnseiten relativ zueinander abgetrennt, ausgebildet sein. Beispielsweise kann der dritte Randabschnitt 9.3 in zwei Teilrandabschnitt 9.31 und 9.32 unterteilt sein, wobei die jeweiligen Teilrandabschnitte 9.31 und 9.32 in ihrer Längserstreckung an die Breite der Rückseite eines Fahrzeugrücksitzes oder die Breite eines klappbar ausgebildeten Teilelementes eines Fahrzeugrücksitzbank individuell angepasst ist. Wird das eine Teilelement der Rücksitzbank oder der Rücksitz für eine größere Ladekapazität des Laderaums in Richtung der Vordersitze umgeklappt, so kann für eine möglichst ebene Ladefläche auch der entsprechende Teilrandabschnitt 9.31 bzw. 9.32 mit umgeklappt werden. Eine möglichst ebene Ladefläche auf dem als Abdeckungsboden ausgebildeten Abdeckungselement 2 lässt sich somit herstellen.

Weiterhin kann das Abdeckungselement 2'" einen schürzenartigen Ladekantenschutz 11 aufweisen. Vorzugsweise ist der Ladekantenschutz 11 an der dem dritten Randabschnitt 9.3 gegenüberliegenden freien Stirnseite des Abdeckungselementes 2'" angeordnet. Der Ladekantenschutz 11 ist dabei derart bemessen, dass er zumindest die Oberseite einer Stoßstange des Fahrzeuges im ausgeklappten bzw. ausgerollten Zustand überdeckt. Vorzugsweise ist der Ladekantenschutz 11 aus einem elastischen Material, beispielsweise einem gummiartigen Material, gebildet. Mithin kann der Ladekantenschutz an der im ausgerollten bzw. ausgeklappten Zustand der Stoßstange zugewandten Unterseite eine rutschhemmende Beschichtung aufweisen. Insbesondere kann der Ladekantenschutz 11 mittels eines lösbaren Verbindungsmittels 12, beispielweise mit Hilfe eines Reißverschlusses, an dem Abdeckungselement 2'" befestigt sein. Alternativ ist es jedoch auch möglich, den Ladekantenschutz 11 an dem Abdeckungselement 2'" anzunähen.

In einer besonders bevorzugten Ausführungsvariante ist der Ladekantenschutz 11 faltbar ausgebildet, und zwar weist dieser eine leporelloartige Faltung auf, über welche der Ladekantenschutz 11 ganz oder zumindest teilweise in das Innere des jeweiligen Fahrzeuges einfaltbar ist. Im ausgefalteten Zustand überdeckt der Ladekantenschutz 11 vorzugsweise die Einstiegs- oder Ladeöffnung des jeweiligen Fahrzeuges vollständig. Der Ladekantenschutz 11 ist im eingefalteten Zustand vorzugsweise im Bereich der Innenseite der Einstiegs- oder Ladeöffnung angeordnet bzw. dort festlegbar. Der Ladekantenschutz 11 kann hierbei ein- oder mehrteilig ausgebildet sein. Insbesondere kann dieser an der Unterseite eine Dämpfungs- und/oder Antirutschbeschichtung zumindest abschnittsweise aufweisen.

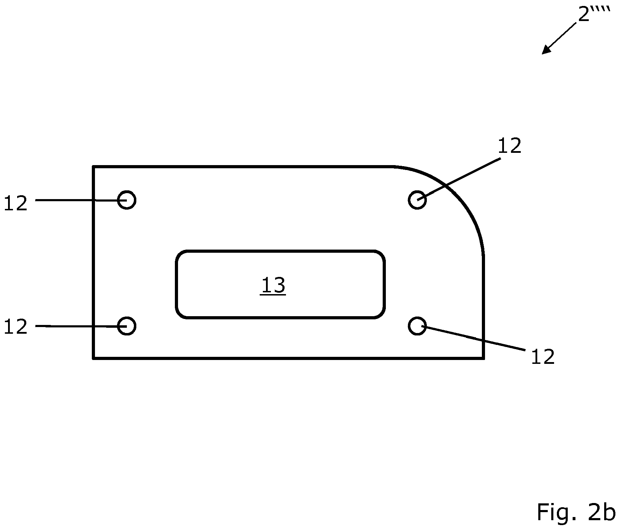

In Figur 2b ist in einer schematischen Seitenansicht ein als Seitenelement ausgebildetes Abdeckungselement 2"" gezeigt. Insbesondere ist dabei die geometrische Formgestaltung des als Seitenelement ausgebildeten Abdeckungselementes 2"" individuell an die geometrische Formgestaltung der Seitenverkleidung des Ladenraumes eines Fahrzeuges angepasst ausgebildet. Eine erfindungsgemäße Abdeckungsanordnung 1 kann neben dem den Abdeckungsboden bildenden Abdeckungselement 2'" auch mehrere, vorzugsweise zwei oder drei Seitenelemente bildenden Abdeckungselemente 2"" aufweisen.

Es versteht sich, dass das als Seitenelement ausgebildete Abdeckungselement 2"" in seiner geometrischen Formgestaltung auch an die geometrische Formgestaltung der Rückseite einer Rücksichtbank, eines Rücksitzes oder alternativ der Innenseite eines Kofferraumdeckels oder einer Kofferraumtür individuell angepasst ausgebildet sein kann. Dies kann insbesondere durch Druckverformung, sowohl Kaltdruckverformung als auch Warmdruckverformung, des mehrschichtigen Materials des entsprechenden Abdeckungselementes 2, 2' - 2"" erreicht werden, um den geometrischen Ausformungen der originalen Verkleidungen des Laderaumes des Fahrzeuges optimal zu entsprechen.

Weiterhin kann das entsprechende Abdeckungselement 2, 2' - 2"" wenigstens ein lösbares Befestigungsmittel 12 aufweisen, das beispielweise als Druckknopf ausgebildet sein kann. Über derartige Befestigungsmittel 12 kann das entsprechende Abdeckungselement 2...2"" lösbar an entsprechenden Aufnahmemitteln für die Befestigungsmittel 12 befestigt sein. Insbesondere können die Aufnahmemittel an der Seitenverkleidung des Laderaums vorgesehen sein, derart, dass die Abdeckungselemente 2, 2' - 2"" mittels ihrer entsprechenden Befestigungsmittel 12 lösbar in den in der Seitenverkleidung vorgesehenen Aufnahmemitteln befestigbar sind. Die Abdeckungselemente 2, 2' - 2"" können damit einfach und bedarfsgerecht im Laderaum des Fahrzeuges montiert und wieder abgenommen werden. Weiterhin wird somit eine einfache Zugänglichkeit von in der Seitenverkleidung des Laderaumes vorgesehenen Staufächern gewährleistet. Weiterhin kann auch vorgesehen sein, dass wenigstens zwei Abdeckungselemente 2, 2' - 2"" mittels entsprechender Befestigungsmittel 12 und korrespondierenden Aufnahmemitteln für die Befestigungsmittel 12 lösbar miteinander verbunden sind. Hierbei kann insbesondere vorgesehen sein, dass eine erstes Abdeckungselement 2, 2' - 2"" wenigstens ein Befestigungsmittel 12 aufweist, während eine zweites Abdeckungselement 2, 2' - 2"" ein zu diesem wenigstens einem Befestigungsmittel 12 korrespondierendes Aufnahmemittel aufweist.

Zudem kann das Abdeckungselement 2, 2' - 2"" wenigstens eine Ausnehmung 13 in Form einer Materialdurchbrechung bzw. -aufsparung aufweisen, um beispielsweise im Laderaum des Fahrzeugs vorgesehene Beleuchtungsmittels frei zu halten. Selbst bei einem montierten Abdeckungselement 2, 2' - 2"" bleibt somit die Beleuchtungsfunktion des Leuchtmittels im Laderaum des Fahrzeuges erhalten. Auch kann vorgesehen sein, dass mittels der wenigstens einen Ausnehmung 13 ein Staufach im Laderaum ausgespart wird, so dass auch dieses bei montiertem Abdeckungselement 2, 2' - 2"" weiterhin zugänglich ist. Die wenigstens eine Ausnehmung 13 ist damit insbesondere anpassbar ausgebildet.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Abdeckungsanordnung
- 2, 2' - 2"": Abdeckungselement
- 3: Schaumstoffschicht
- 3.1: Oberseite
- 3.2: Unterseite
- 4: Oberflächenschicht
- 5: Trägerschicht
- 5.1: Oberseite
- 5.2: Unterseite
- 6: Sperrschicht
- 6.1: Oberseite
- 6.2: Unterseite
- 7: Verstärkungsschicht
- 7.1: Oberseite
- 7.2: Unterseite
- 8: Heizeinrichtung
- 9.1: erster Randabschnitt
- 9.11, 9.12: Teilrandabschnitt
- 9.13: Abtrennung
- 9.2: zweiter Randabschnitt
- 9.21, 9.22: Teilrandabschnitt
- 9.23: Abtrennung
- 9.3: dritter Randabschnitt
- 9.31, 9.32: Teilrandabschnitt
- 9.33: Abtrennung
- 10: Steppnaht
- 11: Ladekantenschutz
- 12: Verbindungsmittel
- 13: Ausnehmung

## Patentansprüche

1. Abdeckungsanordnung für einen Laderaum eines Fahrzeugs umfassend mehrere, aus einem mehrschichten Material hergestellte und mattenartig ausgebildete Abdeckungselemente (2, 2' - 2""), die zumindest eine offenzellige Schaumstoffschicht (3) aufweisen, an deren Oberseite (3.1) wenigstens eine diffusionsoffene Oberflächenschicht (4) und an deren Unterseite (3.2) zumindest eine rutschhemmende Trägerschicht (5) vorgesehen ist, wobei zwischen der Schaumstoffschicht (3) und der Trägerschicht (5) eine feuchtigkeitsundurchlässige Sperrschicht (6) angeordnet ist, **dadurch gekennzeichnet dass** zumindest teilflächig an der Unterseite (3.2) der Schaumstoffschicht (3) wenigstens eine elektrische Heizeinrichtung (8) zum Ausheizen von in der Schaumstoffschicht (3) befindlicher Feuchtigkeit vorgesehen ist.

2. Abdeckungsanordnung nach Anspruch 1, **dadurch gekennzeichnet, dass** die diffusionsoffene Oberflächenschicht (4) dazu ausgebildet ist, an ihrer der Schaumstoffschicht (3) abgewandten Oberflächenseite befindliche Feuchtigkeit in die Schaumstoffschicht (3) zu leiten und/oder dass die Oberflächenschicht (4) zumindest teilflächig aus einem Microfasergewebe und/oder Kunstleder hergestellt ist.

3. Abdeckungsanordnung nach Anspruch 1 oder 2, **dadurch gekennzeichnet, dass** die Schaumstoffschicht (3) zumindest teilweise aus einem thermoplastischen und/oder elastomerischen und/oder duroplastischen Material gebildet ist und/oder dass die Trägerschicht (5) aus einem nicht gewebten Textilgewebe, insbesondere Filz, gebildet ist.

4. Abdeckungsanordnung nach einem der vorhergehenden Ansprüche 1 bis 3, **dadurch gekennzeichnet, dass** zumindest die Schaumstoffschicht (3), die Oberflächenschicht (4), die Trägerschicht (5) sowie die Sperrschicht (6) des jeweiligen Abdeckungselementes (2, 2' - 2"") kongruente Flächenelemente ausbilden, die zumindest teilflächig in unmittelbaren Berührungskontakt stehen.

5. Abdeckungsanordnung nach einem der vorhergehenden Ansprüche 1 bis 4, **dadurch gekennzeichnet, dass** zwischen der Sperrschicht (6) und der Schaumstoffschicht (3) zumindest teilflächig eine plattenartige Verstärkungsschicht (7) vorgesehen ist.

6. Abdeckungsanordnung nach einem der vorhergehenden Ansprüche 1 bis 5, **dadurch gekennzeichnet, dass** zumindest ein einen Abdeckungsboden ausbildendes mattenartiges Abdeckungselement (2"') sowie zumindest ein, ein Seitenelement bildendes mattenartiges Abdeckungselement (2"") vorgesehen ist.

7. Abdeckungsanordnung nach Anspruch 6, **dadurch gekennzeichnet, dass** das zumindest eine den Abdeckungsboden ausbildende Abdeckungselement (2"') in seiner geometrischen Grundform an die geometrische Grundform des Laderaumbodens des Fahrzeuges angepasst ist und/oder dass das zumindest eine den Abdeckungsboden ausbildende Abdeckungselement (2"') zumindest einen, sich wenigstens teilweise an einer der freien Randkanten erstreckenden Randabschnitt (9.1 - 9.3) aufweist.

8. Abdeckungsanordnung nach Anspruch 7, **dadurch gekennzeichnet, dass** das zumindest eine den Abdeckungsboden ausbildende Abdeckungselement (2"') wenigstens einen ersten und einen zweiten seitlichen Randabschnitt (9.1, 9.2) aufweist, wobei der erste und zweite Randabschnitt (9.1, 9.2) an entsprechend gegenüberliegenden freien Randkanten des Abdeckungselementes (2"') vorgesehen sind.

9. Abdeckungsanordnung nach Anspruch 8, **dadurch gekennzeichnet, dass** das zumindest eine den Abdeckungsboden ausbildende Abdeckungselement (2"') an der dem ersten und zweiten Randabschnitt (9.1, 9.2) verbindenden freien Randkante wenigstens einen dritten Randabschnitt (9.3) aufweist, der einen Rückenwandabschnitt ausbildet und/oder dass der erste und/oder zweite und/oder dritte Randabschnitt (9.1, 9.2, 9.3) jeweils in wenigstens zwei Teilrandabschnitte (9.11, 9.12 bzw. 9.21, 922, bzw. 9.31, 9.32) durch eine entsprechende Abtrennung (9.13, 9.23, 9.33) unterteilt ist.

10. Abdeckungsanordnung nach einem der vorhergehenden Ansprüche 6 bis 9, **dadurch gekennzeichnet, dass** das zumindest eine den Abdeckungsboden ausbildende Abdeckungselement (2'") zumindest eine Steppnaht (10) aufweist, die eine Biege- oder Klappkante ausbildet und/oder dass das zumindest eine den Abdeckungsboden ausbildende Abdeckungselement (2"') an der dem dritten Randabschnitt (9.3) gegenüberliegenden freien Randkante zumindest einen Ladekantenschutz (11) aufweist, wobei der Ladekantenschutz (11) eine Faltung, insbesondere eine leporelloartige Faltung aufweist.

11. Abdeckungsanordnung nach Anspruch 10, **dadurch gekennzeichnet, dass** der Ladekantenschutz (11) zumindest abschnittsweise eine dämpfende und/oder rutschhemmende Beschichtung aufweist.

12. Abdeckungsanordnung nach Anspruch 6, **dadurch gekennzeichnet, dass** das zumindest eine als Seitenelement ausbildende Abdeckungselement (2"") in seiner geometrischen Grundform an die geometrische Grundform der Seitenverkleidung des Laderaums des Fahrzeuges angepasst ist.

13. Abdeckungsanordnung nach Anspruch 6 oder 12, **dadurch gekennzeichnet, dass** das zumindest eine als Seitenelement ausgebildete Abdeckungselement (2"") wenigstens ein Befestigungsmittel (12), insbesondere einen Druckknopf, aufweist.

14. Abdeckungsanordnung nach Anspruch 6, 12 oder 13, **dadurch gekennzeichnet, dass** das zumindest eine als Seitenelement ausbildende Abdeckungselement (2"") wenigstens eine Ausnehmung (13) aufweist.

## Claims

1. A cover assembly for a loading space of a motor vehicle, comprising a plurality of cover elements (2, 2' - 2"") which are produced from a multi-layered material and which are designed in a mat-like manner, which comprise at least one open-cell foam layer (3), wherein on the upper face (3.1) thereof at least one surface layer (4) which is open to diffusion is provided and on the lower face (3.2) thereof at least one slip-resistant carrier layer (5) is provided, wherein a moisture-impermeable barrier layer (6) is arranged between the foam layer (3) and the carrier layer (5), **characterized in that** at least one electrical heating device (8) is provided on at least part of the surface on the lower face (3.2) of the foam layer (3) for removing moisture located in the foam layer (3) by means of heat.

2. Cover assembly according to claim 1, **characterised in that** the surface layer (4) which is open to diffusion is designed to conduct moisture which is located on its surface side remote from the foam layer (3) into the foam layer (3), and/or **in that** the surface layer (4) is produced on at least part of the surface from a microfibre fabric and/or synthetic leather.

3. Cover assembly according to claim 1 or 2, **characterised in that** the foam layer (3) is formed at least partially from a thermoplastic and/or elastomeric and/or thermosetting material and/or **in that** the carrier layer (5) is formed from a nonwoven textile fabric, in particular felt.

4. Cover assembly according to one of the preceding claims 1 to 3, **characterised in that** at least the foam layer (3), the surface layer (4), the carrier layer (5) and the barrier layer (6) of the respective cover element (2, 2' - 2"") form congruent surface elements which are in direct contact on at least part of the surface.

5. Cover assembly according to one of the preceding claims 1 to 4, **characterised in that** a plate-like reinforcing layer (7) is provided on at least part of the surface between the barrier layer (6) and the foam layer (3).

6. Cover assembly according to one of the preceding claims 1 to 5, **characterised in that** at least one mat-like cover element (2"') forming a cover base and at least one mat-like cover element (2"") forming a side element are provided.

7. Cover assembly according to claim 6, **characterised in that** the at least one cover element (2"') forming the cover base is adapted in its basic geometric shape to the basic geometric shape of the loading space floor of the motor vehicle and/or **in that** the at least one cover element (2"') forming the cover base comprises at least one edge portion (9.1 - 9.3) extending at least partially on one of the free end edges.

8. Cover assembly according to claim 7, **characterised in that** the at least one cover element (2"') forming the cover base comprises at least one first and one second lateral edge portion (9.1, 9.2), wherein the first and second edge portions (9.1, 9.2) are provided on correspondingly opposing free end edges of the cover element (2"').

9. Cover assembly according to claim 8, **characterised in that** the at least one cover element (2"') forming the cover base comprises on the free end edge connecting the first and second edge portions (9.1, 9.2) at least one third edge portion (9.3), which forms a rear wall portion and/or **in that** the first and/or second and/or third edge portion (9.1, 9.2, 9.3) in each case is subdivided into at least two partial edge portions (9.11, 9.12 and/or 9.21, 9.22 and/or 9.31, 9.32) by a corresponding partition (9.13, 9.23, 9.33).

10. Cover assembly according to one of the preceding claims 6 to 9, **characterised in that** the at least one cover element (2"') forming the cover base comprises at least one stitchweld (10) which forms a bending edge or folding edge and/or **in that** the at least one cover element (2"') forming the cover base comprises at least one loading edge protection (11) on the free end edge opposing the third edge portion (9.3), wherein the loading edge protection (11) comprises a fold, in particular a leporello-like fold.

11. Cover assembly according to claim 10, **characterised in that** the loading edge protection (11) comprises at least in some sections a damping and/or slip-resistant coating.

12. Cover assembly according to claim 6, **characterised in that** the at least one cover element (2"") formed as a side element is adapted in its basic geometric shape to the basic geometric shape of the side cladding of the loading space of the motor vehicle.

13. Cover assembly according to claim 6 or 12, **characterised in that** the at least one cover element (2"") formed as a side element comprises at least one fastening means (12), in particular a snap fastener.

14. Cover assembly according to claim 6, 12 or 13, **characterised in that** the at least one cover element (2"") formed as a side element comprises at least one recess (13).

## Revendications

1. Système de recouvrement pour un espace de chargement d'un véhicule comprenant plusieurs éléments de recouvrement (2,2',2"") fabriqués à partir d'un matériau multicouches et constitués sous forme de nattes, qui comportent au moins une couche de mousse à alvéoles ouvertes (3), au moins une couche superficielle ouverte à la diffusion (4) étant prévue sur sa face supérieure (3.1) et au moins une couche de support antidérapante (5) sur sa face inférieure (3.2), une couche d'arrêt imperméable à l'humidité (6) étant disposée entre la couche de mousse (3) et la couche de support (5), **caractérisé en ce qu'**au moins sur une partie de la surface de la face inférieure (3.2) de la couche de mousse (3) au moins un dispositif de chauffage électrique (8) est prévu pour étuver l'humidité se trouvant dans la couche de mousse (3).

2. Système de recouvrement selon la revendication 1, **caractérisé en ce que** la couche superficielle ouverte à la diffusion (4) est constituée pour diriger l'humidité se trouvant sur son côté de surface opposé à la couche de mousse (3) dans la couche de mousse (3) et/ou **en ce que** la couche superficielle (4) est fabriquée pour une partie de la surface à partir d'un tissu en microfibres et/ou similicuir.

3. Système de recouvrement selon la revendication 1 ou 2, **caractérisé en ce que** la couche de mousse (3) est formée au moins en partie d'un matériau thermoplastique et/ou élastomère et/ou thermodurcissable et/ou **en ce que** la couche de support (5) est formée d'un tissu textile non tissé, notamment de feutre.

4. Système de recouvrement selon l'une quelconque des revendications précédentes 1 à 3, **caractérisé en ce qu'**au moins la couche de mousse (3), la couche superficielle (4), la couche de support (5) ainsi que la couche d'arrêt (6) de l'élément de recouvrement respectif (2,2',2"") constituent des éléments de surface congruents, qui sont au moins sur une partie de la surface en contact direct.

5. Système de recouvrement selon l'une quelconque des revendications précédentes 1 à 4, **caractérisé en ce qu'**une couche de renfort (7) de type plaque est prévue au moins sur une partie de la surface entre la couche d'arrêt (6) et la couche de mousse (3).

6. Système de recouvrement selon l'une quelconque des revendications précédentes 1 à 5, **caractérisé en ce qu'**au moins un élément de recouvrement sous forme de nattes (2"') constituant un fond de recouvrement ainsi qu'au moins un élément de recouvrement sous forme de nattes (2"") formant un élément latéral sont prévus.

7. Système de recouvrement selon la revendication 6, **caractérisé en ce qu'**au moins un élément de recouvrement (2"') constituant un fond de recouvrement est adapté à la forme de base géométrique du fond de l'espace de chargement du véhicule et/ou **en ce qu'**au moins un élément de recouvrement (2"') constituant le fond de recouvrement comporte au moins un tronçon de bord (9.1-9.3) s'étendant au moins en partie sur un des bords libres.

8. Système de recouvrement selon la revendication 7, **caractérisé en ce qu'**au moins un élément de recouvrement (2"') constituant le fond de recouvrement comporte au moins un premier et un deuxième tronçon de bord latéral (9.1,9.2), le premier et le deuxième tronçon de bord (9.1,9.2) sont prévus sur les bords libres opposés de façon correspondante de l'élément de recouvrement (2"').

9. Système de recouvrement selon la revendication 8, **caractérisé en ce qu'**au moins un élément de recouvrement (2"') constituant le fond de recouvrement comporte sur le bord libre reliant le premier et le deuxième tronçon de bord (9.1,9.2) au moins un troisième tronçon de bord (9.3), qui constitue un tronçon de paroi arrière et/ou **en ce que** le premier et/ou le deuxième et/ou le troisième tronçon de bord (9.1,9.2,9.3) sont subdivisés respectivement en au moins deux tronçons de bord partiels (9.11, 9.12 ou 9.21, 9.22 ou 9.31, 9.32) par une séparation correspondante (9.13,9.23,9.33).

10. Système de recouvrement selon l'une quelconque des revendications 6 à 9, **caractérisé en ce qu'**au moins un élément de recouvrement (2"') constituant le fond de recouvrement comporte au moins une couture piquée (10) qui constitue un bord pliant ou rabattable et/ou **en ce qu'**au moins un élément de recouvrement (2"') constituant le fond de recouvrement comporte sur le bord libre opposé au troisième tronçon de bord (9.3) au moins une protection de bord de chargement (11), la protection de bord de chargement (11) comportant un pliage, notamment un pliage de type accordéon.

11. Système de recouvrement selon la revendication 10, **caractérisé en ce que** la protection de bord de chargement (11) comporte au moins par tronçon un revêtement amortissant et/ou antidérapant.

12. Système de recouvrement selon la revendication 6, **caractérisé en ce qu'**au moins un élément de recouvrement (2"") constituant un élément latéral est adapté dans sa forme de base géométrique à la forme de base géométrique du revêtement latéral de l'espace de chargement du véhicule.

13. Système de recouvrement selon la revendication 6 ou 12, **caractérisé en ce qu'**au moins un élément de recouvrement (2"") constitué comme un élément latéral comporte au moins un moyen de fixation (12), notamment un bouton-pression.

14. Système de recouvrement selon la revendication 6, 12 ou 13, **caractérisé en ce qu'**au moins un élément de recouvrement (2"") constitué comme un élément latéral comporte au moins un évidement (13).
